# EUROPÄISCHE PATENTSCHRIFT

(11) **EP 2 457 884 B1**
(45) Veröffentlichungstag und Bekanntmachung des Hinweises auf die Patenterteilung: **25.09.2013**
(21) Anmeldenummer: 11189748.4
(22) Anmeldetag: 18.11.2011
(51) Int. Cl.: C04B 26/32, C08F 230/04, C08F 230/08, C08G 77/04, C08L 83/04, C08L 43/00, C08L 43/04, C04B 26/06

(54) **Wässriges Hybridbindemittel für Fugenmörtel**
Aqueous hybrid binder for jointing mortars
Liant hybride aqueux pour mortier-joint

(30) Priorität: 26.11.2010 DE 102010062054
(43) Veröffentlichungstag der Anmeldung: 30.05.2012
(73) Patentinhaber: Wacker Chemie AG, 81737 München (DE)
(72) Erfinder: Sandmeyer, Frank, Dr., 84508 Burgkirchen (DE); Auer, Dominik, Dr., 84503 Altötting (DE)
(74) Vertreter: Fritz, Helmut

(56) Entgegenhaltungen:
- EP-A1- 1 308 468
- WO-A2-2009/086079
- WO-A2-2010/063708
- DE-A1- 4 402 408
- DE-A1-102005 000 824
- DE-A1-102008 002 570

## Beschreibung

Die Erfindung betrifft die Verwendung von Copolymerisaten von ethylenisch ungesättigten Monomeren und von ethylenisch funktionalisierten Nanopartikeln in Form derer wässrigen Dispersionen oder in Wasser redispergierbaren Pulvern.

Die Verwendung von ebenen oder nicht ebenen Bauteilen aus Keramik, Stein, Beton oder anderen Materialien zur Bedeckung von Oberflächen im Bau- und Gebäudebereich, allgemein als Fliesen bezeichnet, ist seit langer Zeit Stand der Technik. Dabei werden Fliesen stets so angebracht, dass zwischen ihnen Lücken entstehen, die nachträglich ausgefüllt werden. Zum Ausfüllen dieser Zwischenräume verwendet man Fugenmörtel. Diese Fugenmörtel sind häufig zementäre Mischungen, die mit Wasser vermengt und in die Fliesenzwischenräume gefüllt werden. Außer Zement kommen auch Kunstharze zum Einsatz, wie Epoxidharze, die gegenüber zementären Systemen technische Vorteile aufweisen können. Zementäre Systeme sind penetrationsfähig und leicht benetzbar und daher verschmutzungsempfindlich. Ein Umstand, dem man zu begegnen versucht, indem man Additive wie zum Beispiel Silicone zusetzt, die etwa die Hydrophobie der Fugenmaterialien steigern oder indem man polymere Bindemittel zumischt, zum Beispiel Acrylatpolymere (siehe z.B. US 4 472 540) oder Epoxidharze, wobei vor allem letztere eine sehr gute Chemikalien- und Verschmutzungsbeständigkeit und mechanische Eigenschaften aufweisen. Nachteilig ist an den Epoxidharzsystemen jedoch, dass sie gesundheitsschädliche Inhaltsstoffe enthalten und sehr schwierig zu verarbeiten sind. US 4 833 178 beispielsweise beschreibt ein epoxidharzgebundenes Fugenmörtelsystem, bei dem eine Kombination aus einem Härter und einem Epoxidharz verwendet wird, die unmittelbar vor der Anwendung miteinander vermischt werden. Solche Fugenmörtel härten relativ rasch aus, was auch das Besondere der Erfindung gemäß US 4 833 178 ist und bilden einen sehr festen kaum noch zu lösenden Haftverbund mit den Fliesen. Das bedeutet, dass Verschmutzungen auf den Fliesen durch das Ausbringen des Fugenmörtels sofort entfernt werden müssen, da dies nachträglich kaum noch möglich ist, ohne die Fliesen zu beschädigen. Außerdem müssen solche gebrauchsfertigen Mischungen zur Gänze aufgebraucht werden, da sie nicht mehr lagerfähig sind. Sind Härter und Harz zusammengemischt, entspricht die Lagerzeit der Topfzeit, die wenige Stunden nicht übersteigt.
Daher können epoxidharzgebundene Fugenmörtel an sich nur von professionellen Anwendern eingesetzt werden.

US 2005/0197444 beschreibt Fugenmörtel, die lufttrocknende Acrylatpolymere als Bindemittel enthalten und zusätzlich eine polymere Komponente, die die Verschmutzungsneigung reduziert. Diese Komponente kann ein Siloxan, ein Siliconat oder ein Silan ebenso sein, wie ein Fluorpolymer.
Die verschmutzungsabweisenden Komponenten sind wie aus der Aufzählung ersichtlich, solche mit einer niedrigen Oberflächenspannung. Sie separieren leicht zur Oberfläche hin, wo sie hoch effizient gegen Verschmutzung wirksam sind. Allerdings sind sie auch nur an der Oberfläche konzentriert. Wird die Oberfläche im Laufe ihres Gebrauchslebens mechanisch beschädigt oder die oberen Schichten durch Abrasion oder andere Einflüsse abgetragen, geht der Effekt verloren und letztendlich treten die gleichen Nachteile auf, wie bei nicht mit derartigen Substanzen ausgerüsteten Fugenmörteln. Da Silicone oder Fluorpolymere zudem sehr unverträgliche Komponenten sind, die nicht leicht mit anderen Polymeren mischbar sind, ist eine homogene Verteilung derselben in der gesamten Fugenmörtelmatrix nicht möglich. Eine solche gleichmäßige Verteilung kann nur dadurch erreicht werden, dass man die gegen die Verschmutzung wirksamen Komponenten chemisch an die Polymermatrix bindet und so ein Separieren an die Oberfläche verhindert. Dabei ist die homogene Verteilung von beispielsweise Siliconen in einer an sich mit ihnen unverträglichen Polymermatrix nur dann möglich, wenn die Silicone in dem Polymer bereits während dessen Entstehung vorhanden sind und zwar in einer Phase, in der die Unverträglichkeit noch nicht ausgebildet ist. Zudem muss eine geeignete Polymerisationstechnologie eingesetzt werden, die sicherstellt, dass die chemische Anbindung des Silicons an die Polymermatrix auch tatsächlich stattfindet und dass nicht von der Polymermatrix losgelöste Silicondomänen entstehen. Diese würden zwar auch in der Polymermatrix unter Umständen fein verteilt vorliegen, jedoch kommen aufgrund der Unverträglichkeiten des Silicons mit der umgebenden Polymermatrix Abstoßungseffekte im Randbereich zum Tragen, die zu Mikroporosität führen. Dadurch bilden sich Kanäle zum Eindringen von verschmutzenden Substanzen oder Wasser, was sowohl die Funktionstauglichkeit als auch den ästhetischen Eindruck einer Fuge beeinträchtigt.

Es ist die Aufgabe der vorliegenden Erfindung den Stand der Technik zu verbessern, insbesondere entsprechende Polymere für die Anwendung in Fugenmörteln bereitzustellen, die solche schmutzabweisenden Komponenten als integralen Bestandteil enthalten, der in der Polymermatrix gleichmäßig verteilt ist, wodurch auch in der Anwendung dieses Polymers im Fugenmörtel eine homogene Verteilung der verschmutzungsabweisenden Substanzen im Fugenmörtel erreicht wird, ohne die nachteiligen Abstoßungseffekte.

Polymerdispersionen, welche Partikel mit Abmessungen im Nanometerbereich, das heißt Partikel mit Abmessungen kleiner 100 nm in wenigstens einer Dimension, enthalten, weisen gegenüber Compositen mit weniger feinteiligen Partikeln (etwa im Mikrometerbereich) eine Fülle überlegener und neuartiger Eigenschaften auf. Diese umfassen beispielsweise die Lichtstreuung, das Adsorptions- und Absorptionsverhalten, die antibakteriellen Eigenschaften oder überlegene Kratz- und Reissfestigkeiten. Diese "nano-Effekte" hängen unmittelbar mit der Größe der Partikel zusammen und gehen verloren, wenn die Partikel bestimmte Abmessungen überschreiten.

Weiterhin sind die erwünschten Effekte nur dann besonders ausgeprägt, wenn es gelingt die Teilchen in der Polymermatrix möglichst homogen zu verteilen und wenn möglich chemisch anzubinden, um ein Austragen oder Agglomerationsphänomene und damit einen Verlust dieser speziellen Eigenschaften zu vermeiden.

Eine Möglichkeit der chemischen Anbindung von nano-skaligen-Metalloxiden an polymere Matrizen ist beispielsweise in der DE 10212121 A1 für nano-Zinkoxid-Polymerdispersionen beschrieben. Dabei werden die Zinkoxidpartikel in einem halogenhaltigen Medium dispergiert, die Dispersion in eine wässrige Lösung hydroxylgruppenhaltiger anorganischer Polymere, beispielsweise von hydrolysierten Polyalkyl(alkoxy)siloxanen, gegeben und anschließend die halogenhaltigen Bestandteile durch Destillation entfernt. Die chemische Anbindung an das Polymer erfolgt somit über die Ausbildung einer Zn-O-Si-O-C-Brücke und ist damit sehr labil gegenüber saurer oder alkalischer Spaltung.

Handelt es sich bei den Partikeln um Siliconharze, so ist bekannt, dass diese zur chemischen Modifizierung von organischen Polymeren oder als Bindemittel von Beschichtungen eingesetzt werden können, um die Beständigkeit der Beschichtungen zum Beispiel gegen Witterungseinflüsse, chemischen Angriff und thermische Belastung zu erhöhen. Kommerziell erhältliche Produkte sind zum Beispiel Siliconpolyester, hybride Systeme aus Siliconharzen und organischen Polymeren, wie sie zur Herstellung von Metallbandbeschichtungen Einsatz finden. Diese Produkte werden vorzugsweise durch chemische Umsetzung und Bindungsbildung zwischen dem Siliconharz und dem organischen Polymer hergestellt. Eine chemische Anbindung der Siliconharze an das organische Polymer erfolgt dabei in der Regel unter Ausbildung einer Si-O-C-Brücke zwischen beiden, üblicherweise in einem Lösemittelprozess. Für wässrige Medien kennt die Literatur verschiedene Produkte aus Kombinationen von organischen Polymeren mit Siliconharzen oder harzartigen oligomeren Siliconstrukturen und Verfahren zu deren Herstellung:
Die EP 1256611 A2 beschreibt eine wässrige Dispersion, erhalten aus einer Mischung und Emulsion von nicht radikalisch polymerisierbaren Alkoxysilanen oder deren Hydrolyse- und Kondensationsprodukten mit radikalisch polymerisierbaren Monomeren. Die Silane oder die daraus abgeleiteten Produkte werden hydrolysiert und kondensiert, während die organischen Monomere radikalisch polymerisiert werden. Die eingesetzten Silane sind dabei Alkyl- oder Arylalkoxysilane, wobei bis zu drei an Silicium gebundene Alkoxygruppen vorliegen können. Daraus sind durch Hydrolyse und Kondensation auch Harze oder harzartige Oligomere zugänglich.

Die EP 1197502 A2 lehrt die Herstellung einer wässrigen Harzemulsion durch radikalische Polymerisation ethylenisch ungesättigter Monomere in Gegenwart von hydrolysierbaren und kondensationsfähigen Mono-, Di- oder Trialkoxyalkyl- oder - aryl-Silanen, die nicht radikalisch polymerisierbar sind.

In der EP 943634 A1 werden wässrige Latices zur Verwendung als Beschichtungsmittel beschrieben, welche durch Copolymerisation von ethylenisch ungesättigten Monomeren in Gegenwart eines Silanolgruppen enthaltenden Siliconharzes hergestellt werden. Es bilden sich dabei interpenetrating networks (IPN) zwischen den Polymerketten und der Polysiloxanketten.

Die mit den genannten Verfahren erhältlichen Siliconharz-Emulsionspolymerisate sowie die ansonsten hinreichend bekannten physikalischen Mischungen von Siliconharzemulsionen und organischen Polymerdispersionen zum Einsatz beispielsweise im Bereich der Siliconharzfassadenfarben, zeichnen sich dadurch aus, dass das Siliconharz und das organische Polymer ausschließlich oder überwiegend in Form physikalischer Abmischungen vorliegen. Chemische Bindungen zwischen dem Siliconanteil und dem organischen Anteil bauen sich eher zufällig auf, wobei es sich dabei um hydrolyseanfällige Si-O-C-Bindungen handelt. Die Si-O-C-Bindung steht dabei stets in Konkurrenz zur Si-O-Si-Brückenbildung durch Kondensation der Silanolgruppen miteinander.

Die Kondensationsreaktionen der Silanbausteine oder ihrer hydrolysierten und teilweise kondensierten Oligomeren unter den hydrolytischen Bedingungen einer Emulsionspolymerisation sind nur unzureichend kontrollierbar. Es ist bekannt, dass vor allem Alkoxysilane mit kurzen sauerstoffgebundenen Alkylresten unter hydrolytischen Bedingungen eine ausgeprägte Neigung haben, bis hin zu festen Partikeln aufzukondensieren. Diese neigen zur Niederschlags- und Domänenbildung und damit Separation. Diese Neigung ist umso ausgeprägter, je mehr Alkoxygruppen am Silicium gebunden sind. In der Anwendung als Beschichtungsstoff kann sich dies in Form von Stippenbildung negativ auswirken. Die Produkte können durch Separation ihre Lagerstabilität und Gebrauchsfähigkeit einbüßen.

Eine definiertere Anbindung des Siliconbausteins mit dem organischen Polymer über die Ausbildung von C-C-Bindungen kann durch Copolymerisation von doppelbindungsfunktionalisierten Siliconen mit organischen Monomeren erfolgen. So werden beispielsweise in der EP 1308468 A1 hydrophob modifizierte Copolymerisate beschrieben, die dadurch erhalten werden, dass lineare Silicone mit bis zu zwei polymerisierbaren Gruppen in Emulsion mit organischen Monomeren copolymerisiert werden. Einen ähnlichen Ansatz verfolgt EP 352339 A1, in der vinylterminierte, lineare Polydimethylsiloxane mit (Meth)acrylat-Monomeren copolymerisiert werden. Die EP 771826 A2 beschreibt die Emulsionspolymerisation von (Meth)acrylsäureestern und Vinylaromaten, wobei zur Vernetzung difunktionelle acrylgruppen- oder vinylgruppenhaltige Silicone zugegeben werden. Die EP 635 526 A1 beschreibt funktionelle Pfropfpolymerisate auf Basis von Organopolysiloxanen, welche durch Aufpropfen von ethylenisch ungesättigten Monomeren auf Polyorganosiloxane erhalten werden, welche Wasserstoff oder funktionelle Gruppen, sowie ethylenisch ungesättigte Gruppen, enthalten.

Die Herstellung von partikelhaltigen Organocopolymerdispersionen ist Gegenstand von EP 1216262 B1 und EP 1235869 B1, wobei zur Herstellung einer wässrigen Dispersion aus anorganischen Feststoffteilchen und Organopolymer anorganische Feststoffteilchen eingesetzt werden, welche durch einen definierten Dispergiergrad und eine definierte elektrophoretische Mobilität gekennzeichnet sind, und in deren Gegenwart ethylenisch ungesättigte Monomere polymerisiert werden. In der EP 505230 A1 wird die Verkapselung von Siliciumoxidteilchen mit Organopolymer beschrieben, wobei zunächst die Siliciumdioxid-Partikel mit ethylenisch ungesättigten Alkoxysilanverbindungen funktionalisiert werden und anschließend in deren Anwesenheit in wässriger Dispersion ethylenisch ungesättigte Monomere polymerisiert werden.

Die Anbindung von Polymer an Nanopartikel war bisher unbefriedigend, weil keine stabile C-C-Bindung erhalten wurde. Es bestand daher die Aufgabe, partikelhaltige Dispersionen zur Verfügung zu stellen, bei denen in einfacher Weise eine stabile Anbindung des Polymerteils an das Nanopartikel erfolgt und deren Verwendbarkeit als Bindemittel für Fugenmörtel zu zeigen.

Die kovalente chemische Fixierung der Partikel an die organische Matrix über C-C-Bindungen im wässrigen Medium, wurde nun dadurch gelöst, dass die zu fixierenden Partikel mit einer speziellen Klasse ethylenisch ungesättigter Silane, die lediglich durch ein C-Atom zwischen Silan- und Organofunktion ("alpha-Silane") gekennzeichnet sind, funktionalisiert wurden. Die Silane weisen anders als bisher eingesetzte Reagenzien eine hohe Reaktivität bezüglich Funktionalisierung auf und sind überraschenderweise gleichzeitig unter den Polymerisationsbedingungen stabil. Weiterhin wurde gefunden, dass die Polymerisationsbedingungen im Gegensatz zum Stand der Technik so gewählt werden, dass eine effektive Copolymerisation der hydrophoben Partikel mit organischen Monomeren im wässrigen Medium durchgeführt wird bei gleichzeitiger weitestgehender Beibehaltung der Partikelidentität.

DE 102005000824 A, DE 102008002570 A, WO 2010/063708 A und WO 2009/086079 A beschreiben Copolymerisate von ethylenisch ungesättigten Monomeren und von ethylenisch funktionalisierten Nanopartikeln in Form deren wässrigen Polymerdispersionen oder in Wasser redispergierbaren Polymerpulvern und deren Einsatz in Beschichtungen.

DE 4402408 A beschreibt Mischungen aus einerseits Homo- oder Copolymerisaten von ethylenisch ungesättigten Monomeren mit nicht copolymerisierbare Organosiliciumverbindungen mit hohem Siedepunkt und deren Einsatz zur Herstellung von Fugenmörtel.

Gegenstand der Erfindung ist ein Verfahren zur Herstellung von Fugenmörtel, dadurch gekennzeichnet, dass Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von 1 bis 1000 nm, wobei die Teilchengröße durch Transmissionselektronenmikroskopie der erhaltenen Dispersionen oder der aus den Dispersionen erhältlichen Filme bestimmt wird,
   welches mit ethylenisch ungesättigten, radikalisch polymerisierbaren Gruppen funktionalisiert ist, wobei
B1) als Partikel P ein oder mehrere aus der Gruppe der Metalloxide und Halbmetalloxide eingesetzt werden, und/oder
B2) als Partikel P Siliconharze eingesetzt werden, welche aus Wiederholungseinheiten der allgemeinen Formel [R⁴_{(p+z)}SiO_{(4-p-z)/2}] (II) aufgebaut sind, wobei R⁴ gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt, und wobei B1) und B2) jeweils mit einem oder mehreren α-Organosilanen der allgemeinen Formel (R¹O)₃₋ₙ(R²)ₙSi-(CR³₂)-X (I) funktionalisiert werden, wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist,
   mit Sand verschiedenster Kornfeinheit und Zusammensetzung, Wasser, und gegebenenfalls weiteren Bindemitteln und Hilfsstoffen vermischt werden.

Ein weiterer Gegenstand der Erfindung ist ein Fugenmörtel, dadurch gekennzeichnet, dass Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von 1 bis 1000 nm, wobei die Teilchengröße durch Transmissionselektronenmikroskopie der erhaltenen Dispersionen oder der aus den Dispersionen erhältlichen Filme bestimmt wird,
   welches mit ethylenisch ungesättigten, radikalisch polymerisierbaren Gruppen funktionalisiert ist, wobei
B1) als Partikel P ein oder mehrere aus der Gruppe der Metalloxide und Halbmetalloxide eingesetzt werden, und/oder
B2) als Partikel P Siliconharze eingesetzt werden, welche aus Wiederholungseinheiten der allgemeinen Formel [R4(p+z)SiO(4-p-z)/2] (II) aufgebaut sind, wobei R4 gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt, und wobei B1) und B2) jeweils mit einem oder mehreren α-Organosilanen der allgemeinen Formel (R1O)3-n(R2)nSi-(CR32)-X (I) funktionalisiert werden, wobei R1 für Wasserstoff, einen Alkylrest mit 1 bis 6 Kohlenstoffatomen oder einen Arylrest steht, R2 und R3 jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist, enthalten sind und dass sie Sand verschiedenster Kornfeinheit und Zusammensetzung, Wasser, und gegebenenfalls weitere Bindemittel und Hilfsstoffe enthalten.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10R (Handelsnamen der Firma Resolution). Besonders bevorzugt ist Vinylacetat.

Geeignete Monomeren aus der Gruppe Acrylsäureester oder Methacrylsäureester sind vorzugsweise Ester von unverzweigten oder verzweigten Alkoholen mit 1 bis 15 C-Atomen, bevorzugt, Dodecanol, Octanol, Isooctanol, Hexanol, Butanol, Isobutanol, Propanol, Isopropanol, Ethanol und Methanol, besonders bevorzugt Hexanol, Butanol, Propanol, Isopropanol, Ethanol und Methanol. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Als Vinylaromaten bevorzugt sind Styrol, alpha-Methylstyrol, die isomeren Vinyltoluole und Vinylxylole sowie Divinylbenzole. Besonders bevorzugt ist Styrol.

Unter den Vinylhalogenverbindungen sind vorzugsweise Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid.
Ein bevorzugter Vinylether ist beispielsweise Methylvinylether.

Die bevorzugten Olefine sind Ethen, Propen, 1-Alkylethene sowie mehrfach ungesättigte Alkene, und die bevorzugten Diene sind 1,3-Butadien und Isopren. Besonders bevorzugt sind Ethen und 1, 3-Butadien.

Gegebenenfalls können noch 0.1 bis 5 Gew.-%, bezogen auf das Gesamtgewicht der Monomere A), Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Besonders bevorzugt werden als Comonomere A) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien verwendet. Besonders bevorzugt werden als Comonomere A) auch Gemische von Vinylacetat und Ethylen; Gemische von Vinylacetat, Ethylen und einem Vinylester von α-verzweigten Monocarbonsäuren mit 9 bis 11 C-Atomen; Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat verwendet; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, daß im allgemeinen vorzugsweise eine Glasübergangstemperatur Tg von ≤ 60°C, vorzugsweise -50°C bis +60°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Der Anteil der Comonomere A beträgt vorzugsweise ≥ 50 Gew.-%, besonders bevorzugt 70 bis 90 Gew.-%., jeweils bezogen auf das Gesamtgewicht aus A) und funktionalisiertem B).

Geeignete Partikel P sind aus der Gruppe B1) Siliciumoxide und Metalloxide. Bei den Metalloxiden sind die Oxide der Metalle Aluminium, Titan, Zirkonium, Tantal, Wolfram, Hafnium, Zink und Zinn bevorzugt. Bei den Siliciumoxiden werden kolloidale Kieselsäure, pyrogene Kieselsäure, gefällte Kieselsäure, Kieselsole besonders bevorzugt. Bei den Metalloxiden sind Aluminiumoxide wie Korund, Aluminiummischoxide mit anderen Metallen und/oder Silicium, Titanoxide, Zirkonoxide, Eisenoxide besonders bevorzugt.

Bevorzugte Partikel P aus der Gruppe der Siliconharze sind solche, die sich zu mindestens 30 Mol-% aus Q-Einheiten aufbauen, das heißt für die p+z in der allgemeinen Wiederholungsformel [R⁴_{(p+z)}SiO_{(4-p-z)/2}] (II) die Bedeutung 0 hat. Besonders bevorzugte Siliconharze sind solche, die nur aus Mund Q-Einheiten aufgebaut sind, das heißt für die p+z in der allgemeinen Formel [R⁴(p_{+z})SiO(₄-p-_{Z})_{/2]} (II) nur die Bedeutung 0 und 3 hat und solche, die nur aus M-, Q- und D-Einheiten aufgebaut sind, das heißt für die p+z in der allgemeinen Formel [R⁴_{(p+z)}SiO_{(4-p-z)/2}] (II) nur die Bedeutung 0, 2 und 3 hat. Falls die Reste R⁴ substituiert sind, so können diese zusätzlich eines oder mehrere gleiche oder verschiedene Heteroatome ausgewählt aus O-, S-, Si-, Cl-, F-, Br-, P- oder N-Atomen enthalten. Darüber hinaus sind auch solche Siliconharze geeignet, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T-und/oder Q-Einheiten enthalten sind und ihr Anteil an den Einheiten, die das Siliconharz aufbauen, in Summe mindestens 20 Mol-% beträgt und bei Vorlage jeweils nur einer dieser Einheiten ihr Anteil jeweils mindestens 20 Mol-% ist.

Am meisten bevorzugte Siliconharze B2) sind solche, die sich im Wesentlichen nur aus M, D und Q Einheiten aufbauen, wobei das Mol-Verhältnis von M/Q-Einheiten von 30/70 bis 60/40 reicht, insbesondere bevorzugt sind Harze mit einem M/Q-Verhältnis von 35/65 bis 45/55. Weiterhin am meisten bevorzugte Harze sind solche, die aus D- und T-Einheiten aber zum überwiegenden Teil aus T-Einheiten bestehen, insbesondere solche die zu > 80 Mol-% aus T-Einheiten bestehen, ganz besonders solche die zu praktisch 100 Mol-% aus T-Einheiten bestehen.

Die Partikel P besitzen bevorzugt einen mittleren Durchmesser von 1 bis 1000 nm, besonders bevorzugt 1 bis 100 nm, wobei die Teilchengröße durch Transmissionselektronenmikroskopie der erhaltenen Dispersionen oder der aus den Dispersionen erhältlichen Filme bestimmt wird.

Unter α-Organosilane sind solche Silane zu verstehen, bei denen das Alkoxy-, Aryloxy- oder OH-substituierte Siliciumatom, direkt über eine Methylenbrücke mit einem ungesättigten Kohlenwasserstoffrest verbunden ist, welcher ein oder mehrere ethylenisch ungesättigte Kohlenstoffbindungen aufweist, wobei die Wasserstoffreste der Methylenbrücke auch durch Alkyl- und/oder Arylreste ersetzt sein können, und eine C=C-Doppelbindung in α-Stellung zum Si-Atom steht.

Geeignete α-Organosilane der Formel (R¹O)₃₋ₙ(R²)ₙSi-(CR³₂)-X (I) sind auch solche in denen die Kohlenstoffkette der Reste R¹, R² und R³ durch nicht benachbarte Sauerstoff-, Schwefel-, oder NR⁴-Gruppen unterbrochen sind. Bevorzugt sind als Reste R¹ und R² unsubstituierte Alkylgruppen mit 1 bis 6 C-Atomen und als Rest R³ Wasserstoff. Der Rest X kann linear, verzweigt oder cyclisch sein. Neben der Doppelbindung können auch weitere funktionelle Gruppen vorhanden sein, die in der Regel gegenüber einer olefinischen Polymerisation inert sind, beispielsweise Halogen-, Carboxy-, Sulfinato-, Sulfonato-, Amino-, Azido-, Nitro-, Epoxy-, Alkohol-, Ether-, Ester-, Thioether- und Thioester-Gruppen sowie aromatische iso- und heterocyclische Gruppen. Bevorzugte Beispiele für X sind einfach ungesättigte C₂- bis C₁₀-Reste, am meisten bevorzugt sind als Rest X der Acryl- und Methacrylrest.

Der Anteil der funktionalisierten Partikel P beträgt vorzugsweise 0.5 bis 50 Gew.-%, vorzugsweise 1 bis 30 Gew.-%, besonders bevorzugt 10 bis 20 Gew.-%, jeweils bezogen auf das Gesamtgewicht der Komponente A) und der funktionalisierten Komponente B).

Zusätzlich können in den erfindungsgemäß verwendeten Polymerdispersionen und Polymerpulvern noch bis zu 30 Gew.-%, bezogen auf das Gesamtgewicht der Komponenten A) und B), mindestens eines Silans der allgemeinen Formel

(R⁵)₄₋ₘ-Si-(OR⁶)ₘ (III)

enthalten sein, wobei m eine Zahl im Wert von 1, 2, 3 oder 4 bedeutet, R⁵ ein organofunktioneller Rest ist, ausgewählt aus der Gruppe Alkoxyrest und Aryloxyrest mit jeweils 1 bis 12 C-Atomen, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliciumatom gebunden sein kann oder durch eine Kohlenstoffkette von 1 bis 6 C-Atomen davon getrennt sein kann und R⁶ einen einwertigen linearen oder verzweigten aliphatischen oder cycloaliphatischen Kohlenwasserstoffrest oder einen einwertigen aromatischen Kohlenwasserstoffrest mit jeweils 1 bis 12 C-Atomen, oder einen Rest -C(=O)-R⁷ bedeutet, wobei R⁷ einen einwertigen linearen oder verzweigten aliphatischen oder einen cycloaliphatischen Kohlenwasserstoffrest mit jeweils 1 bis 12 C-Atomen oder einen einwertigen aromatischen Kohlenwasserstoffrest bedeutet. Das ausgewählte Silan oder gegebenenfalls die ausgewählten Silane können in nicht hydrolysierter Form, in hydrolysierter Form oder in hydrolysierter und teilkondensierter oder hydrolysierter und kondensierter Form oder in einem Gemisch dieser Formen vorliegen.

Weiterhin können im Fall der Miniemulsionspolymerisation gegebenenfalls noch hydrophobe Zusätze in Mengen von bis 3 Gew.-% vorhanden sein (sogenannte "Co-Tenside", "Hydrophobe") bezogen auf das Gesamtgewicht der Komponente A) und der funktionalisierten Komponente B). Im vorliegenden Fall können Siliconpartikel oftmals die Funktion des "Co-Tensids" übernehmen. Weitere Beispiele für Co-Tenside sind Hexadekan, Cetylalkohol, oligomere Cyclosiloxane, wie z.B. Octamethylcyclotetrasiloxan, aber auch pflanzliche Öle wie Rapsöl, Sonnenblumenöl oder Olivenöl. Weiterhin geeignet sind organische oder anorganische Polymere mit einem zahlenmittleren Molekulargewicht von < 10000.
Erfindungsgemäß bevorzugte Hydrophobe sind die zu polymerisierenden Silikonpartikel selbst, sowie D3-, D4- und D5-Zyklen und Hexadekan. Besonders bevorzugt sind die zu polymerisierenden Silikonpartikel und Hexadekan.

Die Herstellung der Copolymerisate erfolgt in einem Heterophasenprozess nach den bekannten Techniken der Suspensions-, Emulsions- oder Miniemulsionspolymerisation (vgl. z.B. Peter A. Lovell, M.S. El-Aasser, "Emulsion Polymerization and Emulsion Polymers" 1997, John Wiley and Sons, Chichester). In einer besonders bevorzugten Form wird die Reaktion nach der Methodik der Miniemulsionspolymerisation durchgeführt. Miniemulsionspolymerisationen unterscheiden sich in einigen wesentlichen Punkten, die sie für die Copolymerisation wasserunlöslicher Comonomere besonders geeignet machen, von anderen Heterophasenpolymerisationen (vgl. z.B. K. Landfester, "Polyreactions in Miniemulsions", Macromol. Rapid Commun. 2001, 22, 896-936 und M.S. El-Aasser, E.D. Sudol, "Miniemulsions: Overview of Research and Applications" 2004, JCT Research, 1, 20-31).

Die Reaktionstemperaturen liegen vorzugsweise von 0°C bis 100°C, bevorzugt von 5°C bis 80°C, besonders bevorzugt von 30°C bis 70°C. Der pH-Wert des Dispergiermediums liegt zwischen 2 und 9, bevorzugt zwischen 4 und 8, in einer besonders bevorzugten Ausführungsform zwischen 6.5 und 7.5. Die Einstellung des pH-Wertes vor Beginn der Reaktion kann durch Salzsäure oder Natronlauge erfolgen. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

Die Initiierung der Polymerisation erfolgt mittels der üblichen wasserlöslichen Initiatoren oder Redox-Initiator-Kombinationen. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril, bevorzugt Wasserstoffperoxid, t-Butylperoxid, t-Butylhydroperoxid, t-Butylperoxopivalat, Cumolhydroperoxid, Isopropylbenzolmonohydroperoxid und Azobisisobutyronitril, besonders bevorzugt t-Butylhydroperoxid und Cumolhydroperoxid. Die genannten Initiatoren werden vorzugsweise in Mengen von 0.01 bis 4.0 Gew.-%, bezogen auf das Gesamtgewicht der Monomeren, eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure, bevorzugt Natriumhydroxymethansulfinat, Natriumsulfit, Natriumhydroxymethansulfinat und Ascorbinsäure, besonders bevorzugt Natriumhydroxymethansulfinat. Die Reduktionsmittelmenge beträgt vorzugsweise 0.15 bis 3 Gew.-%, der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes InitiatorSystem aus den vorangenannten Komponenten ist das System t-Butylhydroperoxid/-Natriumhydroxymethansulfinat/Fe(EDTA)^{2+/3+}.

Im Falle der Reaktionsführung nach der Miniemulsionspolymerisationsmethodik können auch überwiegend öllösliche Initiatoren verwendet werden, etwa vorzugsweise Cumolhydroperoxid, Isopropylbenzolmonohydroperoxid, Dibenzoylperoxid oder Azobisisobutyronitril. Bevorzugte Starter für Miniemulsionspolymerisationen sind Kaliumpersulfat, Ammoniumpersulfat, Azobisisobutyronitril sowie Dibenzoylperoxid.

Die Ausmaße der Partikeldomänen innerhalb des Copolymers liegen nach erfolgter Copolymerisation vorzugsweise im Bereich von 1 nm bis 1000 nm, bevorzugt von 1 nm bis 500 nm und ganz besonders bevorzugt von 1 nm bis 200 nm. Die Ausmaße lassen sich beispielsweise durch Rasterelektronenmikroskopie oder Transmissionselektronenmikroskopie der Polymerdispersionen oder der aus ihnen erhaltenen Polymerfilme bestimmen.

Zur Herstellung von in Wasser redispergierbaren Polymerpulvern werden die wässrigen Dispersionen der erfindungsgemäßen Copolymerisate in dem Fachmann bekannter Weise getrocknet, vorzugsweise nach dem Sprühtrocknungsverfahren.

Im Vergleich zu Systemen, die nur durch Bildung von M-O-M (M = Metall), Si-O-Si, oder M-O-Si-Bindungen vernetzen, weisen die erfindungsgemäßen partikelhaltigen Dispersionen und Redispersionspulver aufgrund der C-C-Knüpfung außerdem eine erhöhte Umwelt- und Chemikalienresistenz auf, beispielsweise gegenüber stark saurem oder alkalischem Milieu.

Diese Resistenz kann noch gesteigert werden, wenn durch zusätzliche Anwesenheit von Silanol- und/oder Alkoxygruppen auf der Partikeloberfläche neben der Anknüpfung des Partikels an die organische Matrix über C-C-Bindungsbildung eine zusätzliche Vernetzung zwischen den Partikeln durch M-O-Si-O-Si-M erfolgen kann. Werden durch Zusatz von radikalisch polymerisierbaren Silanen zusätzlich Alkoxysilyl- und/oder Silanolfunktionen in die Polymerseitenketten eingebaut, so kann eine zusätzliche Nachvernetzung auch durch Si-O-Si-Bindungsbildung zwischen Partikel und Seitenkette oder zwischen Seitenkette und Seitenkette erfolgen.

Die erfindungsgemäßen Fugenmörtel enthalten neben den erfindungsgemäßen Dispersionen auch weitere Formulierungsbestandteile, wie sie üblicherweise für die Herstellung solcher Zubereitungen gemäß Stand der Technik verwendet werden, also Sand verschiedenster Kornfeinheit und Zusammensetzung, Wasser, gegebenenfalls auch weitere Bindemittel und können zusätzlich Hilfsstoffe enthalten:
Beispiele für Hilfsstoffe sind Tenside (C), wobei sowohl anionische Tenside, als auch nichtionische Tenside, oder kationische Tenside, oder ampholytische Tenside geeignet sind.

Weitere Hilfsstoffe sind Pigmente (D), beispielsweise Erdpigmente, wie Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente.

Die Fugenmörtel können noch Zusatzstoffe (E) enthalten. Zusatzstoffe (E) sind beispielsweise Biozide, Verdicker, Alkylorthotitanate, Alkylborsäureester, Pigmentnetz-und Dispergiermittel, Antischaummittel, Korrosionsschutzpigmente, weitere Metalloxide, die nicht identisch ist mit dem Pigment (D) sind und keine Korrosionsschutzpigmente sind, Metallcarbonate und organische Harze.

Die Aufzählung der möglichen Zubereitungsbestandteile und Hilfsstoffe ist dabei nicht einschränkend sondern beispielhaft zu verstehen und wird durch den Stand der Technik ergänzt.

Die erfindungsgemäßen nanopartikelhaltigen Organocopolymerdispersionen werden während dem Vorgang der Herstellung der Fugenmörtelzubereitung in geeigneter Weise zugegeben und mit den übrigen Zubereitungsbestandteilen homogen vermengt, wobei hierfür die dem Stand der Technik entsprechenden Prozesse und Manipulationen Anwendung finden.

Die Fugenmörtel enthalten vorzugsweise 1 bis 90 Gew.-%, besonders bevorzugt 4 bis 70 Gew.-% der nanopartikelhaltigen Organocopolymerdispersionen.

Die Anteile in Gew.-% sind dabei jeweils auf das Gesamtgewicht des Baustoffbeschichtungsmittels bezogen.

### Beispiele:

### Beispiel I Synthese von erfindungsgemäßen nanopartikelhaltigen Copolymerdispersionen

### (10 Gew.-% Partikel 2, MMA (Methylmethacrylat)/n-Butylacrylat 1/1) :

| | |
|---|---|
| Vorlage | |
| 16.6 g MMA | 16.6 g n-Butylacrylat |
| 92.4 g Wasser | 1.8 g Acrylsäure |
| 0.4 g Natriumdodecylsulfat je 10 mg Fe(II)-sulfat u. EDTA | 0.16 g Natriumvinylsulfonat |
| Zulauf 1a | Zulauf 1b |
| 10 % Lsg. tert-Butyl- | 5 % Lsg. |
| Hydroperoxid in H₂O | Natriumhydroxymethansulfinat in H₂O |
| Zulauf 2 | |
| 187.6 g Wasser | 5.5 g Acrylsäure |
| 13.3 g Natriumdodecylsulfat | 38.0 g Partikel 2 |
| 149.9 g n-Butylacrylat | 149.9 g MMA |

Feststoffgehalt: 50.8 %, pH-Wert: 8.1; Brookfield-Viskosität 48: 0,103 Pas; Glasübergangstemperatur Tg: 54°C; (Nanosizer) Coulter: mittlere Teilchengröße: 285 nm; PDI (Polydispersitätsindex): 1,2; Oberfläche 22.43 m²/g; Verfilmung des Polymers: nach Abtrocknen durch Verdunsten des Wassers: schmier- und klebfreier Film, kein Ausschwitzen von Silicon. TEM-Aufnahmen: Si-Partikel Domänen im Bereich 50 - 700 nm.

### Beispiel 1: Herstellung eines erfindungsgemäßen Fugenmörtels:

Folgende Bestandteile werden in den angegebenen Mengen verwendet:
625g Copolymerdispersion gemäß Beispiel I
1,67g Antischaummittel SILFOAM^{®} SD 860 ein farbloses, trübes Silicon-Antischaummittel auf der Basis aliphatischer und naphthenischer Kohlenwasserstoffe mit dem Zusatz eines organofunktionellen Silicons und hydrophober pyrogener Kieselsäure
1875g Quarzsand HR81T, ein Quarzsand mit einer Korngröße von 0,16 - 0,60 mm.

Die Herstellung der Zubereitung erfolgt nach DIN EN 12808-2, 12808-3 und 12808-5:
- Copolymerdispersion in einen Trog füllen
- Antischaummittel SILFOAM^{®} SD 860 zugeben
- Quarzsand HR81T zugeben
- 30s mischen
- Mischschaufel herausnehmen
- Schaufel und Trog innerhalb 1 min abstreifen
- Schaufel wieder einsetzen und 1 min mischen

### Beispiel 2: Gegenbeispiel: Herstellung einer nicht erfindungsgemäßen Fugenmörtelzubereitung

Als Bindemittel für das Vergleichsbeispiel diente ein kommerziell verfügbares Bindemittel für Fugenmörtel. Es handelt sich dabei um das Produkt ROMPOX^{®}-D1. ROMPOX^{®}-D1 ist ein gering wasserdurchlässiger Pflasterfugenmörtel, der fast jede anfallende Menge an Regenwasser auf die Oberfläche abfließen lässt. Der emulgierbare Pflasterfugenmörtel ist ideal geeignet für unkrautfreie, abrieb- und kehrmaschinenfeste, frost- und tausalzbeständige, schnelle und dauerhafte Verfugung von Natur- und Betonsteinpflastern.
Das Produkt weist folgende Eigenschaften auf:
- selbstverdichtend
- wasseremulgierbar
- gering wasserdurchlässig nach Verfugung
- ab > 0 °C Untergrundtemperatur verarbeitbar
- für mittlere Verkehrsbelastung, d.h. PKW- und leichtem LKW-Verkehr
- Zweikomponenten-Epoxidharz
Es handelt sich bei dem Vergleichsprodukt um ein Zweikomponenten-Epoxidharzsystem (flüssig / flüssig). Somit zählt dieses Produkt zu der Gruppe der kunstharzbasierenden Fugenmörtel, in der die eine Komponente das eigentliche Harz und die andere Komponente den entsprechenden Härter darstellt. Das Zweikomponentensystem von ROMPOX^{®}-D1 besteht zum einen aus der Epoxidharzformulierung auf Basis von Bisphenol A-Flüssigharz und Bisphenol F-Flüssigharz, sowie dem Epoxidharzhärter auf der Basis aliphatischer Polyamine. Beide Komponenten besitzen ein Gefährdungspotential beim Verarbeiten und beim Entsorgen. Die Chemikalien sind als ätzend, reizend, umweltgefährlich und gesundheitsschädlich eingestuft.
Bei der Verarbeitung der Harz-/Härter-Komponenten werden diese während des Mischvorganges langsam und vor allem vollständig zur Füllstoffkomponente, zum Beispiel Quarzsand oder Korund, hinzugegeben. Um diese Mischung fließfähig zu machen, wird eine definierte Menge an Wasser dazugegeben.
Zur Herstellung einer Fugenmörtelzubereitung auf Basis von ROMPOX^{®}-D1 werden folgende Mengen der jeweiligen Komponenten eingesetzt:

| | |
|---|---|
| 125 g | ROMPOX^{®}-D1 Komponente A |
| 125 g | ROMPOX^{®}-D1 Komponente B |
| 2500g | Quarzsand HR81T, ein Quarzsand mit einer Korngröße von 0, 16 - 0,60 mm |
| 4 l | Wasser. |

Die Herstellung der Zubereitung erfolgt gemäß Vorgaben des technischen Datenblattes des Herstellers der ROMPOX^{®}-D1-Produkte. Die Füllstoffkomponente wird vollständig in einen Mischer eingefüllt. Der Mischer wird angestellt. Während des Mischvorganges werden die Komponenten A und B wie oben angegeben zugesetzt. Nach 3 Minuten Mischzeit werden 4 l Wasser dazugegeben und noch einmal mindestens 3 Minuten gemischt.

### Beispiel 3: Anwendungstechnische Vergleichsprüfungen

Die erfindungsgemäße Zubereitung aus Beispiel 1, in der Folge als "1" bezeichnet und das nicht erfindungsgemäße Vergleichsbeispiel 2, in der Folge als "2" bezeichnet, werden hinsichtlich ihrer Anwendungseigenschaften verglichen.

### Herstellung der Probekörper:

### Probekörper für Abriebfestigkeits- und Wasseraufnahmeprüfung:

Verwendung einer Schablone nach DIN EN12808-2

Abweichend von DIN EN 12808-5 wird für die Herstellung der Prüfkörper zur Wasseraufnahmeprüfung eine Silikonschablone verwendet, aus der Probekörper der Dimension 100x100x10mm erhalten werden.

Eine ausreichende Menge an Fugenmörtel wird über die Schablone aufgetragen und anschließend sauber abgezogen, damit der Raum in der Schablone vollständig gefüllt wird.

Die Schablone wird abweichend von DIN EN12808-2 bei Verwendung von 1 als Bindemittel nicht mit einer Glasplatte abgedeckt, da dadurch die Verdunstung des Wassers und somit die Aushärtung stark verzögert, wenn nicht sogar verhindert wird.

Für die Abriebfestigkeits- und Wasseraufnahmeprüfung werden jeweils 2 Probekörper hergestellt.

Nach 4 Tagen Trocknung bei Raumtemperatur wird der Probekörper entsprechend den Vorgaben der Norm gelagert.

### Probekörper für Biege- und Druckfestigkeit:

Die Herstellung der Probekörper erfolgt nach DIN EN 12808-3. Abweichend von der Norm DIN EN 12808-3 werden die Probekörper in einer Silikonform 10x40x160mm hergestellt.

Die Schablone wird abweichend von DIN EN12808-3 bei Verwendung des Bindemittels 1 nicht mit einer Glasplatte abgedeckt, da dadurch die Verdunstung des Wassers und somit die Aushärtung stark verzögert, wenn nicht sogar verhindert wird.

Die Prüfkörper werden nicht, wie in DIN EN 12808-3 beschrieben, verdichtet, da sich die Silikonform nicht ausreichend am Rütteltisch befestigen lässt.

### Prüfen der Probekörper:

### Wasseraufnahmetest

Nach 21 Tagen Lagerung unter Normklima werden alle Seitenfläche der beiden jeweils identischen Probekörper jeder zu prüfenden Fugenmörtelzubereitung, bis auf eine der Dimension 100x10mm, mit Elastosil^{®}N 2034, einem weitestgehend wasserundurchlässigen Elastomer versiegelt.

Nach 27 Tagen Lagerung unter Normklima wird der Wasseraufnahmetest nach DIN EN 12808-5 durchgeführt.

### Ergebnisse:

Für 1: erste Probe:
   nach 30 Min.: 0,06g
   nach 240 Min.: 0,12g
Für 1 zweite Probe:
   b) nach 30 Min.: 0,04g
   b) nach 240 Min.: 0,08g
Mittelwerte für 1:
   **MW nach 30 Min.: Wₘₜ = mₜ - m_{d} = 0,05g**
      **MW nach 240 Min.: Wₘₜ = mₜ - m_{d} = 0,10g**
   m_{d} = die Masse des trockenen Probekörpers, in Gramm
      mₜ = die Masse des Probekörpers nach Eintauchen in Wasser, in Gramm
**Für 2: erste Probe:**
   nach 30 Min. 11,35 g;
   nach 240 Min. 12,17 g
Für 2: zweite Probe:
   nach 30 Min. 11,05 g;
   nach 240 Min. 11,86 g
**Mittelwert für 2:**
   **nach 30 Min: 11,20 g**
   **nach 240 Min: 12,02 g**

### Abriebfestigkeit

Nach 27 Tagen Lagerung im Klimaraum wird die Abriebfestigkeit nach DIN EN 12808-2 geprüft.

### Ergebnisse:

Für 1:
   29mm+30mm+28mm+27mm = 114mm / 4 = 28,5mm
   28,5mm = V = 194mm³ Abrieb
Für 2:
   31 mm + 29 mm + 26 mm + 29 mm = 115 mm / 4 = 28,75 mm;
   2875 mm = 199,5 mm³ Abrieb
(s. Umrechnungstabelle DIN EN 12808-2)

### Biege- und Druckfestigkeit

Nach 27 Tagen Lagerung im Klimaraum wird die Biege- und Druckfestigkeit nach DIN EN 12808-3 geprüft.

### Ergebnisse:

### Für 1:

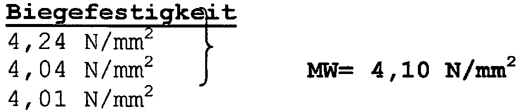

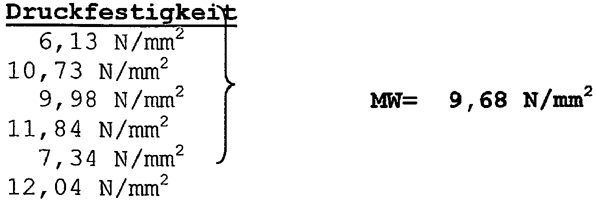

### Für 2:

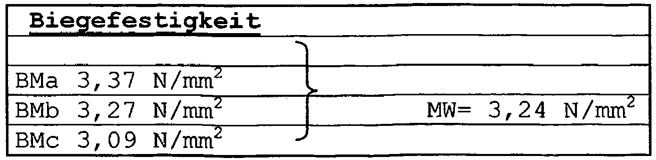

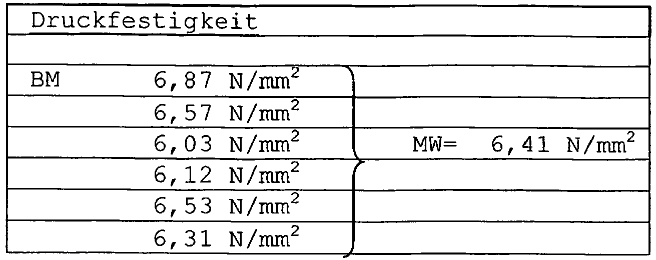

### Verschmutzungstest:

Die Anschmutzbarkeit wird nach dem Auftragen und anschließendem Abwaschen des Schmutzes optisch bestimmt.

Dafür wird der jeweilige Fugenmörtel in einen Kunststoffring (d = 80 mm, h = 5 mm) gegeben. Nach einer Aushärtung von 4 Tagen bei Raumtemperatur werden die Tests durchgeführt.

Die verschmutzenden Substanzen werden mittels Pipette auf das Substrat appliziert.
Das Verhalten der Substrattropfen wird bei Raumtemperatur sofort nach dem Auftragen, nach 1, 5 und 24 Stunden beurteilt.

### Bewertungssystem:

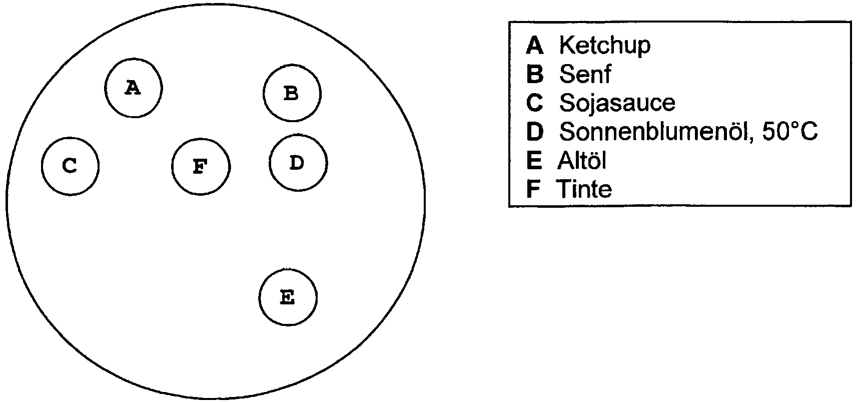

### Bewertung

**1** starke Hydrophobie, kein Spreiten
**2** Tropfen spreitet
**3** Tropfen spreitet, Substrat saugt den Tropfen leicht auf
**4** deutlicher Fleck, Tropfen wird von Substrat vollständig aufgesaugt
**5** deutlicher Fleck auch auf der Rückseite, Tropfen sickert durch Substrat

Bei Ketchup und Senf kann diese Beurteilung nicht angewandt werden, da diese Substanzen einen sehr hohen Festkörperanteil besitzen und die Tropfen dadurch nicht spreiten können.
Es wird lediglich die Flüssigkeit aus den Substanzen vom Substrat aufgesaugt.

| **unmittelbar nach dem Auftragen** | **1** | **2** |
|---|---|---|
| A. Ketchup | Tropfen steht auf Substrat, keine Ansaugung | Tropfen steht auf Substrat, keine Ansaugung |
| B. Senf | | |
| C. Sojasauce | 2 | 4 |
| D. Sonnenblumenöl 50 °C | 2 | 4 |
| E. Altöl | 2 | 4 |
| F. Tinte | 2 | 4 |
| | | |

| **1 Std. nach Auftragen** | 1 | 2 |
|---|---|---|
| A. Ketchup | Tropten steht auf Substrat, leichte Ansaugung der Flüssigkeit | Tropten steht auf Substrat, leichte Ansaugung der Flüssigkeit |
| B. Senf | | |
| C. Sojasauce | 2 | 4 |
| D. Sonnenblumenöl 50°C | 2 | 5 |
| E. Altöl | 3 | 5 |
| F. Tinte | 2 | 4 |
| | | |

| **5 Std. nach Auftragen** | 1 | 2 |
|---|---|---|
| A. Ketchup | Tropfen steht auf Substrat, leicht angetrocknet | Tropfen steht auf Substrat, leicht angetrocknet, Flüssigkeft aufgesaugt |
| B. Senf | | |
| C. Sojasauce | 2 | 4 |
| D. Sonnenblumenöl 50°C | 2 | 5 |
| E. Altöl | 3 | 5 |
| F. Tinte | 2 | 4 |

| **24 Std. nach Auftragen** | 1 | 2 |
|---|---|---|
| A. Ketchup | Tropfen steht auf Substrat, eingetrocknet | Tropfen steht auf Substrat, eingetrocknet |
| B. Senf | | |
| C. Sojasauce | 2 | 4 |
| D. Sonnenblumenöl warm | 2 | 5 |
| E. Altöl | 3 | 5 |
| F. Tinte | 2 | 4 |

Die verwendete blaue Tinte scheint bei den Mustern, die unter Verwendung von 2 hergestellt wurden weitestgehend verschwunden zu sein und keinerlei Verschmutzung zu verursachen. Es bleibt lediglich ein schwachgelber Fleck. Dieser optische Eindruck wird durch eine Farbwechselreaktion unter dem Einfluss des pH-Wertes hervorgerufen. Der blaue Tintenfarbstoff ist im Neutralen bis schwach Basischen gelblich, im stark Basischen allerdings blau. 2 ist stark basisch (pH = 11), während 1 annähernd neutral ist (pH = 7 - 8). Verwendet man eine Tinte mit einem vom betreffenden pH-Wertbereich unabhängigen Farbstoff, wird das oben tabellierte Ergebnis erhalten.

Nach 24 Stunden werden die Probekörper unter fließendem Wasser mit einer Handbürste abgewaschen.
Auf dem Fugenmörtel mit 2 als Bindemittel auch nach dem Abwaschen Flecken aller Substanzen sichtbar. Diese sind in das Substrat eingedrungen und nicht mehr zu entfernen. Von dem Probekörper mit 1 als Bindemittel lassen sich alle Substanzen rückstandslos abwaschen.

In der Gesamtschau der Ergebnisse ist 1 als Bindemittel für Fugenmörtel 2 überlegen. Dazu kommt noch, dass von 1 keine gesundheitsschädliche Wirkung ausgeht, wie das bei 2 der Fall ist. Die Verarbeitung von 1 ist vergleichsweise viel einfacher als die von 2 und auch von einem ungeübten, nicht professionellen Anwender leicht zu bewältigen. Fertige Mischungen von Fugenmörteln mit 1 als Bindemittel, sind über Monate lagerstabil, solange das Abdunsten des Wassers durch geeignete Maßnahmen vermieden wird. Ist die Zubereitung unter Verwendung des Zweikomponentenbindemittels 2 erst einmal gebrauchsfertig hergestellt, ist die Aushärtezeit gleich der Lagerzeit, und beläuft sich somit auf nur wenige Stunden. Zuviel angesetzte Zubereitung unter Verwendung von 2 muss danach verworfen werden, was für den Anwender gegebenenfalls wirtschaftlich nachteilig sein kann.

## Patentansprüche

1. Verfahren zur Herstellung von Fugenmörtel, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von 1 bis 1000 nm, wobei die Teilchengröße durch Transmissionselektronenmikroskopie der erhaltenen Dispersionen oder der aus den Dispersionen erhältlichen Filme bestimmt wird,
welches mit ethylenisch ungesättigten, radikalisch polymerisierbaren Gruppen funktionalisiert ist, wobei
B1) als Partikel P ein oder mehrere aus der Gruppe der Metalloxide und Halbmetalloxide eingesetzt werden, und/oder
B2) als Partikel P Siliconharze eingesetzt werden, welche aus Wiederholungseinheiten der allgemeinen Formel [R⁴_{(p+z)}SiO_{(4-p-z)/2}] (II) aufgebaut sind, wobei R⁴ gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt, und wobei B1) und B2) jeweils mit einem oder mehreren α-Organosilanen der allgemeinen Formel (R¹O)₃₋ₙ(R²)ₙSi-(CR³₂)-X (I) funktionalisiert werden, wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist,
mit Sand verschiedenster Kornfeinheit und Zusammensetzung, Wasser, und gegebenenfalls weiteren Bindemitteln und Hilfsstoffen vermischt werden.

2. Verfahren zur Herstellung von Fugenmörtel nach Anspruch 1, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei in der Polymerdispersion oder im Polymerpulver noch bis zu 30 Gew-%, bezogen auf das Gesamtgewicht der Komponenten A) und B), mindestens eines Silans der allgemeinen Formel (R⁵)₄₋ₘ-Si-(OR⁶)ₘ (III) enthalten ist, wobei m eine Zahl im Wert von 1, 2, 3 oder 4 bedeutet, R⁵ ein organofunktioneller Rest ist, ausgewählt aus der Gruppe Alkoxyrest, Aryloxyrest, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliciumatom gebunden sein kann oder durch eine Kohlenstoffkette von 1 bis 6 C-Atomen davon getrennt sein kann und R⁶ einen einwertigen linearen oder verzweigten aliphatischen oder cycloaliphatischen Kohlenwasserstoffrest oder einen einwertigen aromatischen Kohlenwasserstoffrest oder einen Rest -C(=O)-R⁷ bedeutet, wobei R⁷ einen einwertigen linearen oder verzweigten aliphatischen oder einen cycloaliphatischen Kohlenwasserstoffrest oder einen einwertigen aromatischen Kohlenwasserstoffrest bedeutet, verwendet werden.

3. Verfahren zur Herstellung von Fugenmörtel nach Anspruch 1 oder 2, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Comonomere A) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien eingesetzt werden, verwendet werden.

4. Verfahren zur Herstellung von Fugenmörtel nach Anspruch 1 bis 3, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei das α-Organosilan der Formel (R¹O)_{3- n}(R²)ₙSi-(CR³₂)-X (I) als Reste R¹ und R² unsubstituierte Alkylgruppen mit 1 bis 6 C-Atomen und als Rest R³ Wasserstoff, und als Rest X einfach ungesättigte C₂- bis C₁₀-Reste enthält, verwendet werden.

5. Verfahren zur Herstellung von Fugenmörtel nach Anspruch 1 bis 4, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B1) Siliciumoxide und Oxide der Metalle Aluminium, Titan, Zirkonium, Tantal, Wolfram, Hafnium, Zink und Zinn eingesetzt werden, verwendet werden.

6. Verfahren zur Herstellung von Fugenmörtel nach Anspruch 1 bis 5, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Siliciumoxide kolloidale Kieselsäure, pyrogene Kieselsäure, gefällte Kieselsäure, Kieselsole eingesetzt werden, verwendet werden.

7. Verfahren zur Herstellung von Fugenmörtel nach Anspruch 1 bis 4, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die sich zu mindestens 30 Mol-% aus Q-Einheiten (SiO₄⁴⁻) aufbauen, und für die p+z die Bedeutung 0 hat, verwendet werden.

8. Verfahren zur Herstellung von Fugenmörtel nach Anspruch 1 bis 4, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die nur aus M- (R₃SiO-)und Q-Einheiten (SiO₄⁴⁻) aufgebaut sind, und für die p+z die Bedeutung 0 und 3 hat, verwendet werden.

9. Verfahren zur Herstellung von Fugenmörtel nach Anspruch 1 bis 4, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Siliconharz aufbauen, in Summe mindestens 20 Mol-% beträgt und bei Vorlage jeweils nur einer dieser Einheiten ihr Anteil jeweils mindestens 20 Mol-% ist, verwendet werden.

10. Verfahren zur Herstellung von Fugenmörtel nach Anspruch 1 bis 9, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei der mittlere Durchmesser der Partikel P 1 bis 100 nm beträgt, wobei die Teilchengröße durch Transmissionselektronenmikroskopie der erhaltenen Dispersionen oder der aus den Dispersionen erhältlichen Filme bestimmt wird, verwendet werden.

11. Fugenmörtel, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von 1 bis 1000 nm, wobei die Teilchengröße durch Transmissionselektronenmikroskopie der erhaltenen Dispersionen oder der aus den Dispersionen erhältlichen Filme bestimmt wird,
welches mit ethylenisch ungesättigten, radikalisch polymerisierbaren Gruppen funktionalisiert ist, wobei
B1) als Partikel P ein oder mehrere aus der Gruppe der Metalloxide und Halbmetalloxide eingesetzt werden, und/oder
B2) als Partikel P Siliconharze eingesetzt werden, welche aus Wiederholungseinheiten der allgemeinen Formel [R⁴_{(p+z)}SiO_{(4-p-z)/2}] (II) aufgebaut sind, wobei R⁴ gleich oder verschieden ist, und Wasserstoff-, Hydroxy-, sowie Alkyl-, Cycloalkyl-, Aryl-, Alkoxy- oder Aryloxyreste bedeutet, mit jeweils bis zu 18 C-Atomen, welche gegebenenfalls substituiert sein können, wobei für mindestens 20 Mol-% des jeweiligen Siliconharzes p + z = 0, 1 oder 3 beträgt, und wobei B1) und B2) jeweils mit einem oder mehreren α-Organosilanen der allgemeinen Formel (R¹O)₃₋ₙ(R²)ₙSi-(CR³₂)-X (I) funktionalisiert werden, wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, n die Werte 0, 1 oder 2 bedeuten kann, und X ein Rest mit 2 bis 20 Kohlenwasserstoffatomen mit einer ethylenisch ungesättigten Gruppe ist, enthalten sind
und dass sie Sand verschiedenster Kornfeinheit und Zusammensetzung, Wasser, und gegebenenfalls weitere Bindemittel und Hilfsstoffe enthalten.

12. Fugenmörtel nach Anspruch 11, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei in der Polymerdispersion oder im Polymerpulver noch bis zu 30 Gew-%, bezogen auf das Gesamtgewicht der Komponenten A) und B), mindestens eines Silans der allgemeinen Formel (R⁵)₄₋ₘ-Si-(OR⁶)ₘ (III) enthalten ist, wobei m eine Zahl im Wert von 1, 2, 3 oder 4 bedeutet, R⁵ ein organofunktioneller Rest ist, ausgewählt aus der Gruppe Alkoxyrest, Aryloxyrest, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliciumatom gebunden sein kann oder durch eine Kohlenstoffkette von 1 bis 6 C-Atomen davon getrennt sein kann und R⁶ einen einwertigen linearen oder verzweigten aliphatischen oder cycloaliphatischen Kohlenwasserstoffrest oder einen einwertigen aromatischen Kohlenwasserstoffrest oder einen Rest -C(=O)-R⁷ bedeutet, wobei R⁷ einen einwertigen linearen oder verzweigten aliphatischen oder einen cycloaliphatischen Kohlenwasserstoffrest oder einen einwertigen aromatischen Kohlenwasserstoffrest bedeutet, enthalten sind.

13. Fugenmörtel nach Anspruch 11 oder 12, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Comonomere A) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien eingesetzt werden, enthalten sind.

14. Fugenmörtel nach Anspruch 11 bis 13, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei das α-Organosilan der Formel (R¹O)_{3- n}(R²)ₙSi-(CR³₂)-X (I) als Reste R¹ und R² unsubstituierte Alkylgruppen mit 1 bis 6 C-Atomen und als Rest R³ Wasserstoff, und als Rest X einfach ungesättigte C₂- bis C₁₀-Reste enthält, enthalten sind.

15. Fugenmörtel nach Anspruch 11 bis 14, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B1) Siliciumoxide und Oxide der Metalle Aluminium, Titan, Zirkonium, Tantal, Wolfram, Hafnium, Zink und Zinn eingesetzt werden, enthalten sind.

16. Fugenmörtel nach Anspruch 11 bis 15, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Siliciumoxide kolloidale Kieselsäure, pyrogene Kieselsäure, gefällte Kieselsäure, Kieselsole eingesetzt werden, enthalten sind.

17. Fugenmörtel nach Anspruch 11 bis 14, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die sich zu mindestens 30 Mol-% aus Q-Einheiten (SiO₄⁴⁻) aufbauen, und für die p+z die Bedeutung 0 hat, enthalten sind.

18. Fugenmörtel nach Anspruch 11 bis 14, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die nur aus M- (R₃SiO-)und Q-Einheiten (SiO₄⁴⁻) aufgebaut sind, und für die p+z die Bedeutung 0 und 3 hat, enthalten sind.

19. Fugenmörtel nach Anspruch 11 bis 14, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei als Partikel P aus der Gruppe B2) Siliconharze der allgemeinen Formel [R⁴_{(p+z)}SiO_{(4-p-z)/2}] eingesetzt werden, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Siliconharz aufbauen, in Summe mindestens 20 Mol-% beträgt und bei Vorlage jeweils nur einer dieser Einheiten ihr Anteil jeweils mindestens 20 Mol-% ist, enthalten sind.

20. Fugenmörtel nach Anspruch 11 bis 19, **dadurch gekennzeichnet, dass** Copolymerisate von ethylenisch ungesättigten Monomeren und von ethylenisch funktionalisierten Nanopartikeln in Form deren wässrigen Polymerdispersionen oder in Wasser redispergierbaren Polymerpulver, wobei der mittlere Durchmesser der Partikel P 1 bis 100 nm beträgt, wobei die Teilchengröße durch Transmissionselektronenmikroskopie der erhaltenen Dispersionen oder der aus den Dispersionen erhältlichen Filme bestimmt wird, enthalten sind.

## Claims

1. Process for preparing jointing mortar, **characterized in that** copolymers of ethylenically unsaturated monomers and of ethylenically functionalized nanoparticles in the form of their aqueous polymer dispersions or water-redispersible polymer powders, obtainable by means of free-radically initiated polymerization in aqueous medium, and optionally subsequent drying of the resultant polymer dispersion, of
A) one or more monomers from the group encompassing vinyl esters, (meth)acrylic esters, vinylaromatics, olefins, 1,3-dienes, vinyl ethers and vinyl halides, and optionally further monomers copolymerizable therewith, in the presence of
B) at least one particle P having an average diameter of 1 to 1000 nm, the particle size being determined by transmission electron microscopy of the resultant dispersions or of the films obtainable from the dispersions, and functionalized with ethylenically unsaturated, free-radically polymerizable groups, where
B1) one or more particles from the group of the metal oxides and semimetal oxides are used as particles P, and/or
B2) silicone resins are used as particles P, said resins being composed of repeating units of the general formula [R⁴_{(p+z)}SiO_{(4-p-z)/2}] (II) where R⁴ is identical or different at each occurrence and denotes hydrogen, hydroxyl, and also alkyl, cycloalkyl, aryl, alkoxy or aryloxy radicals, having in each case up to 18 C atoms, and being optionally substituted, with p + z being 0, 1 or 3 for at least 20 mol% of the respective silicone resin, and where B1) and B2) are each functionalized with one or more α-organosilanes of the general formula (R¹O)₃₋ₙ(R²)ₙSi-(CR³₂)-X (I), where R¹ is hydrogen, an alkyl radical having 1 to 6 carbon atoms or an aryl radical, R² and R³ each independently of one another are hydrogen, an alkyl radical having 1 to 12 carbon atoms or an aryl radical, n may be 0, 1 or 2, and X is a radical having 2 to 20 hydrocarbon atoms and an ethylenically unsaturated group, are mixed with sand in any of a very wide variety of grain size fractions and compositions, water, and optionally further binders and auxiliaries.

2. Process for preparing jointing mortar according to Claim 1, **characterized in that** copolymers of ethylenically unsaturated monomers and of ethylenically functionalized nanoparticles are used, in the form of their aqueous polymer dispersions or water-redispersible polymer powders, the polymer dispersion or polymer powder further comprising up to 30% by weight, based on the total weight of components A) and B), of at least one silane of the general formula (R⁵)₄₋ₘ-Si-(OR⁶)ₘ (III), where m is a number 1, 2, 3 or 4, R⁵ is an organofunctional radical selected from the group alkoxy radical, aryloxy radical, phosphonic monoester radical, phosphonic diester radical, phosphonic acid radical, methacryloyloxy radical, acryloyloxy radical, vinyl radical, mercapto radical, isocyanato radical, it being possible for the isocyanato radical optionally to be reaction-blocked for protection from chemical reactions, hydroxyl radical, hydroxyalkyl radical, vinyl radical, epoxy radical, glycidyloxy radical, morpholino radical, piperazino radical, a primary, secondary or tertiary amino radical having one or more nitrogen atoms, it being possible for the nitrogen atoms to be substituted by hydrogen or by monovalent aromatic, aliphatic or cycloaliphatic hydrocarbon radicals, carboxylic acid radical, carboxylic anhydride radical, aldehyde radical, urethane radical, urea radical, it being possible for the radical R⁵ to be attached directly to the silicon atom or to be separated therefrom by a carbon chain of 1 to 6 C atoms, and R⁶ being a monovalent linear or branched aliphatic or cycloaliphatic hydrocarbon radical or a monovalent aromatic hydrocarbon radical or a radical -C(=O)-R⁷, where R⁷ is a monovalent linear or branched aliphatic or a cycloaliphatic hydrocarbon radical or a monovalent aromatic hydrocarbon radical.

3. Process for preparing jointing mortar according to Claim 1 or 2, **characterized in that** copolymers of ethylenically unsaturated monomers and of ethylenically functionalized nanoparticles are used, in the form of their aqueous polymer dispersions or water-redispersible polymer powders, use being made as comonomers A) of one or more monomers from the group vinyl acetate, vinyl esters of α-branched monocarboxylic acids having 9 to 11 C atoms, vinyl chloride, ethylene, methyl - acrylate, methyl methacrylate, ethyl acrylate, ethyl methacrylate, propyl acrylate, propyl methacrylate, n-butyl acrylate, n-butyl methacrylate, 2-ethylhexyl acrylate, styrene, 1,3-butadiene.

4. Process for preparing jointing mortar according to Claim 1 to 3, **characterized in that** copolymers of ethylenically unsaturated monomers and of ethylenically functionalized nanoparticles are used, in the form of their aqueous polymer dispersions or water-redispersible polymer powders, the α-organosilane of the formula (R¹O)₃₋ₙ(R²)ₙSi-(CR³₂)-X (I) comprising, as radicals R¹ and R², unsubstituted alkyl groups having 1 to 6 C atoms, and, as radical R³, hydrogen, and as radical X, monounsaturated C₂ to C₁₀ radicals.

5. Process for preparing jointing mortar according to Claim 1 to 4, **characterized in that** copolymers of ethylenically unsaturated monomers and of ethylenically functionalized nanoparticles are used, in the form of their aqueous polymer dispersions or water-redispersible polymer powders, use being made as particles P from the group B1) of silicon oxides and oxides of the metals aluminum, titanium, zirconium, tantalum, tungsten, hafnium, zinc, and tin.

6. Process for preparing jointing mortar according to Claim 1 to 5, **characterized in that** copolymers of ethylenically unsaturated monomers and of ethylenically functionalized nanoparticles are used, in the form of their aqueous polymer dispersions or water-redispersible polymer powders, use being made as silicon oxides of colloidal silica, fumed silica, precipitated silica, silica sols.

7. Process for preparing jointing mortar according to Claim 1 to 4, **characterized in that** copolymers of ethylenically unsaturated monomers and of ethylenically functionalized nanoparticles are used, in the form of their aqueous polymer dispersions or water-redispersible polymer powders, use being made as particles P from the group B2) of silicone resins of the general formula [R⁴_{(p+z})SiO_{(4-p-z)/2}] which are composed to an extent of at least 30 mol% of Q units (SiO₄⁴⁻), and for which p+z has the definition 0.

8. Process for preparing jointing mortar according to Claim 1 to 4, **characterized in that** copolymers of ethylenically unsaturated monomers and of ethylenically functionalized nanoparticles are used, in the form of their aqueous polymer dispersions or water-redispersible polymer powders, use being made as particles P from the group B2) of silicone resins of the general formula [R⁴_{(p+z)}SiO_{(4-p-z)/2}] which are composed only of M (R₃SiO-) and Q units (SiO₄⁴⁻), and for which p+z has the definition 0 and 3.

9. Process for preparing jointing mortar according to Claim 1 to 4, **characterized in that** copolymers of ethylenically unsaturated monomers and of ethylenically functionalized nanoparticles are used, in the form of their aqueous polymer dispersions or water-redispersible polymer powders, use being made as particles P from the group B2) of silicone resins of the general formula [R⁴_{(p+z)}SiO_{(4-p-z)/2}] which are composed of any desired combination of M units (R₃SiO-), D units (-OSiR₂O-), T units (RSiO₃³⁻) and Q units (SiO₄⁴⁻), with the proviso that there are always T and/or Q units present and that their fraction, as a proportion of the units which make up the silicone resin, is in total at least 20 mol%, and on initial introduction in each case of only one of these units, their proportion in each case is at least 20 mol%.

10. Process for preparing jointing mortar according to Claim 1 to 9, **characterized in that** copolymers of ethylenically unsaturated monomers and of ethylenically functionalized nanoparticles are used, in the form of their aqueous polymer dispersions or water-redispersible polymer powders, the average diameter of the particles P being 1 to 100 nm, the particle size being determined by transmission electron microscopy of the resultant dispersions or of the films obtainable from the dispersions.

11. Jointing mortars, **characterized in that** copolymers of ethylenically unsaturated monomers and of ethylenically functionalized nanoparticles, in the form of their aqueous polymer dispersions or water-redispersible polymer powders, obtainable by means of free-radically initiated polymerization in aqueous medium, and optionally subsequent drying of the resultant polymer dispersion, of
A) one or more monomers from the group encompassing vinyl esters, (meth)acrylic esters, vinylaromatics, olefins, 1,3-dienes, vinyl ethers, and vinyl halides, and optionally further monomers copolymerizable therewith, in the presence of
B) at least one particle P having an average diameter of 1 to 1000 nm, the particle size being determined by transmission electron microscopy of the resultant dispersions or of the films obtainable from the dispersions, and functionalized with ethylenically unsaturated, free-radically polymerizable groups, where
B1) one or more particles from the group of the metal oxides and semimetal oxides are used as particles P, and/or
B2) silicone resins are used as particles P, said resins being composed of repeating units of the general formula [R⁴_{(p+z)}SiO_{(4-p-z)/2}] (II) where R⁴ is identical or different at each occurrence and denotes hydrogen, hydroxyl, and also alkyl, cycloalkyl, aryl, alkoxy or aryloxy radicals, having in each case up to 18 C atoms, and being optionally substituted, with p + z being 0, 1 or 3 for at least 20 mol% of the respective silicone resin, and where B1) and B2) are each functionalized with one or more α-organosilanes of the general formula (R¹O)₃₋ₙ(R²)ₙSi-(CR³₂)-X (I), where R¹ is hydrogen, an alkyl radical having 1 to 6 carbon atoms or an aryl radical, R² and R³ each independently of one another are hydrogen, an alkyl radical having 1 to 12 carbon atoms or an aryl radical, n may be 0, 1 or 2, and X is a radical having 2 to 20 hydrocarbon atoms and an ethylenically unsaturated group, are present and **in that** they contain sand in any of a very wide variety of grain size fractions and compositions, water, and optionally further binders and auxiliaries.

12. Jointing mortar according to Claim 11, **characterized in that** copolymers of ethylenically unsaturated monomers and of ethylenically functionalized nanoparticles are present, in the form of their aqueous polymer dispersions or water-redispersible polymer powders, the polymer dispersion or polymer powder further comprising up to 30% by weight, based on the total weight of components A) and B), of at least one silane of the general formula (R⁵)₄₋ₘ-Si- (OR⁶)ₘ (III), where m is a number 1, 2, 3 or 4, R⁵ is an organofunctional radical selected from the group alkoxy radical, aryloxy radical, phosphonic monoester radical, phosphonic diester radical, phosphonic acid radical, methacryloyloxy radical, acryloyloxy radical, vinyl radical, mercapto radical, isocyanato radical, it being possible for the isocyanato radical optionally to be reaction-blocked for protection from chemical reactions, hydroxyl radical, hydroxyalkyl radical, vinyl radical, epoxy radical, glycidyloxy radical, morpholino radical, piperazino radical, a primary, secondary or tertiary amino radical having one or more nitrogen atoms, it being possible for the nitrogen atoms to be substituted by hydrogen or by monovalent aromatic, aliphatic or cycloaliphatic hydrocarbon radicals, carboxylic acid radical, carboxylic anhydride radical, aldehyde radical, urethane radical, urea radical, it being possible for the radical R⁵ to be attached directly to the silicon atom or to be separated therefrom by a carbon chain of 1 to 6 C atoms, and R⁶ being a monovalent linear or branched aliphatic or cycloaliphatic hydrocarbon radical or a monovalent aromatic hydrocarbon radical or a radical -C(=O)-R⁷, where R⁷ is a monovalent linear or branched aliphatic or a cycloaliphatic hydrocarbon radical or a monovalent aromatic hydrocarbon radical.

13. Jointing mortar according to Claim 11 or 12, **characterized in that** copolymers of ethylenically unsaturated monomers and of ethylenically functionalized nanoparticles are present, in the form of their aqueous polymer dispersions or water-redispersible polymer powders, use being made as comonomers A) of one or more monomers from the group vinyl acetate, vinyl esters of α-branched monocarboxylic acids having 9 to 11 C atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene, 1,3-butadiene.

14. Jointing mortar according to Claim 11 to 13, **characterized in that** copolymers of ethylenically unsaturated monomers and of ethylenically functionalized nanoparticles are present, in the form of their aqueous polymer dispersions or water-redispersible polymer powders, the α-organosilane of the formula (R¹O)₃₋ₙ(R²)ₙSi-(CR³₂)-X (I) comprising, as radicals R¹ and R², unsubstituted alkyl groups having 1 to 6 C atoms, and, as radical R³, hydrogen, and as radical X, monounsaturated C₂ to C₁₀ radicals.

15. Jointing mortar according to Claim 11 to 14, **characterized in that** copolymers of ethylenically unsaturated monomers and of ethylenically functionalized nanoparticles are present, in the form of their aqueous polymer dispersions or water-redispersible polymer powders, use being made as particles P from the group B1) of silicon oxides and oxides of the metals aluminum, titanium, zirconium, tantalum, tungsten, hafnium, zinc, and tin.

16. Jointing mortar according to Claim 11 to 15, **characterized in that** copolymers of ethylenically unsaturated monomers and of ethylenically functionalized nanoparticles are present, in the form of their aqueous polymer dispersions or water-redispersible polymer powders, use being made as silicon oxides of colloidal silica, fumed silica, precipitated silica, silica sols.

17. Jointing mortar according to Claim 11 to 14, **characterized in that** copolymers of ethylenically unsaturated monomers and of ethylenically functionalized nanoparticles are present, in the form of their aqueous polymer dispersions or water-redispersible polymer powders, use being made as particles P from the group B2) of silicone resins of the general formula [R⁴_{(p+z)}SiO_{(4-p-z})_{/2}] which are composed to an extent of at least 30 mol% of Q units (SiO₄⁴⁻) , and for which p+z has the definition 0.

18. Jointing mortar according to Claim 11 to 14, **characterized in that** copolymers of ethylenically unsaturated monomers and of ethylenically functionalized nanoparticles are present, in the form of their aqueous polymer dispersions or water-redispersible polymer powders, use being made as particles P from the group B2) of silicone resins of the general formula [R⁴_{(p+z)}SiO_{(4-p-z)/2}] which are composed only of M (R₃SiO-) and Q units (SiO₄⁴⁻) , and for which p+z has the definition 0 and 3.

19. Jointing mortar according to Claim 11 to 14, **characterized in that** copolymers of ethylenically unsaturated monomers and of ethylenically functionalized nanoparticles are present, in the form of their aqueous polymer dispersions or water-redispersible polymer powders, use being made as particles P from the group B2) of silicone resins of the general formula [R⁴_{(p+z)}SiO_{(4-p-z)/2}] which are composed of any desired combination of M units (R₃SiO-) , D units (-OSiR₂O-) , T units (RSiO₃³⁻) and Q units (SiO₄⁴⁻) , with the proviso that there are always T and/or Q units present and that their fraction, as a proportion of the units which make up the silicone resin, is in total at least 20 mol%, and on initial introduction in each case of only one of these units, their proportion in each case is at least 20 mol%.

20. Jointing mortar according to Claim 11 to 19, **characterized in that** copolymers of ethylenically unsaturated monomers and of ethylenically functionalized nanoparticles are present, in the form of their aqueous polymer dispersions or water-redispersible polymer powders, the average diameter of the particles P being 1 to 100 nm, the particle size being determined by transmission electron microscopy of the resultant dispersions or of the films obtainable from the dispersions.

## Revendications

1. Procédé pour la production de mortier de jointoiement, **caractérisé en ce qu'**on mélange des copolymérisats de monomères à insaturation éthylénique et de nanoparticules à fonctionnalisation éthylénique sous forme de leurs dispersions aqueuses de polymère ou de poudres de polymère redispersables dans l'eau, pouvant être obtenus par polymérisation amorcée par voie radicalaire en milieu aqueux, et éventuellement séchage subséquent de la dispersion de polymère ainsi obtenue, de
A) un ou plusieurs monomères choisis dans le groupe comprenant des esters vinyliques, des esters d'acide (méth)acrylique, des composés vinylaromatiques, des oléfines, des 1,3-diènes, des éthers vinyliques et des halogénures de vinyle et éventuellement d'autres monomères copolymérisables avec ceux-ci, en présence de
B) au moins une particule P ayant un diamètre moyen de 1 à 1 000 nm, la taille de particule étant déterminée par microscopie électronique à transmission des dispersions obtenues ou des films pouvant être obtenus à partir des dispersions,
qui est fonctionnalisée avec des groupes à insaturation éthylénique, aptes à la polymérisation radicalaire,
B1) en utilisant en tant que particule(s) P une ou plusieurs particules choisies dans le groupe des oxydes métalliques et des oxydes de métalloïdes et/ou
B2) en utilisant en tant que particules P des résines de silicone qui sont constituées de motifs répétitifs de formule générale [R⁴_{(p+z)}SiO_{(4-p-z)/2}] (II) , R⁴ étant le même ou différent et représentant un atome d'hydrogène, des radicaux hydroxy ainsi qu'alkyle, cycloalkyle, aryle, alcoxy ou aryloxy ayant chacun jusqu'à 18 atomes de carbone, qui peuvent éventuellement être substitués, pour au moins 20 % en moles de la résine de silicone respective p + z valant 0, 1 ou 3, et B1) et B2) étant fonctionnalisées chacune avec un ou plusieurs α-organosilanes de formule générale (R¹O)₃₋ₙ(R²)ₙSi-(CR³₂)-X (I), R¹ représentant un atome d'hydrogène, un radical alkyle ayant de 1 à 6 atomes de carbone ou un radical aryle, R² et R³ représentant chacun, indépendamment l'un de l'autre, un atome d'hydrogène, un radical alkyle ayant de 1 à 12 atomes de carbone ou un radical aryle, n pouvant avoir les valeurs 0, 1 ou 2, et X étant un radical comportant de 2 à 20 atomes d'hydrocarbure avec un groupe à insaturation éthylénique,
avec du sable de composition et à finesse de grain les plus diverses, et éventuellement d'autres liants et adjuvants.

2. Procédé pour la production de mortier de jointoiement selon la revendication 1, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, dans la dispersion de polymère ou dans la poudre de polymère étant encore contenus jusqu'à 30 % en poids, par rapport au poids total des composants A) et B), d'au moins un silane de formule générale (R⁵)₄₋ₘ-Si-(OR⁶)ₘ (III), m étant un nombre ayant une valeur de 1, 2, 3 ou 4, R⁵ étant un radical organofonctionnel, choisi dans le groupe constitué par un radical alcoxy, un radical aryloxy, un radical monoester d'acide phosphonique, un radical diester d'acide phosphonique, un radical d'acide phosphonique, un radical méthacryloyloxy, un radical acryloyloxy, un radical vinyle, un radical mercapto, un radical isocyanato, le radical isocyanato pouvant éventuellement être bloqué vis-à-vis de réactions pour la protection contre des réactions chimiques, un radical hydroxy, un radical hydroxyalkyle, un radical vinyle, un radical époxy, un radical glycidyloxy, un radical morpholino, un radical pipérazino, un radical amino primaire, secondaire ou tertiaire comportant un ou plusieurs atomes d'azote, les atomes d'azote pouvant être substitués par hydrogène ou par des radicaux hydrocarbonés monovalents aromatiques, aliphatiques ou cycloaliphatiques, un radical carboxy, un radical anhydride d'acide carboxylique, un radical aldéhyde, un radical uréthane, un radical urée, le radical R⁵ pouvant être lié directement à l'atome de silicium ou pouvant être séparé de celui-ci par une chaîne carbonée de 1 à 6 atomes de carbone et R⁶ représentant un radical hydrocarboné monovalent aliphatique linéaire ou ramifié ou cycloaliphatique ou un radical hydrocarboné aromatique monovalent ou un radical -C(=O)-R⁷, R⁷ représentant un radical hydrocarboné monovalent aliphatique linéaire ou ramifié ou un radical hydrocarboné cycloaliphatique ou un radical hydrocarboné aromatique monovalent.

3. Procédé pour la production de mortier de jointoiement selon la revendication 1 ou 2, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant comme comonomères A) un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène, le 1,3-butadiène.

4. Procédé pour la production de mortier de jointoiement selon les revendications 1 à 3, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, contenant l'α-organosilane de formule (R¹O)₃₋ₙ(R²)ₙSi-(CR³₂) -X (I) en tant que radicaux R¹ et R² des groupes alkyle non substitués ayant de 1 à 6 atomes de carbone et en tant que radical R³ un atome d'hydrogène, et en tant que radical X des radicaux en C₂-C₁₀ mono-insaturés.

5. Procédé pour la production de mortier de jointoiement selon les revendications 1 à 4, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant comme particules P du groupe B1) des oxydes de silicium et des oxydes des métaux aluminium, titane, zirconium, tantale, tungstène, hafnium, zinc et étain.

6. Procédé pour la production de mortier de jointoiement selon les revendications 1 à 5, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant comme oxydes de silicium de l'acide silicique colloïdal, de l'acide silicique pyrogéné, de l'acide silicique précipité, des sols de silice.

7. Procédé pour la production de mortier de jointoiement selon les revendications 1 à 4, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant en tant que particules P du groupe B2) des résines de silicone de formule générale [R⁴_{(p+z)}SiO_{(4-p-z)/2}] qui sont constituées à raison d'au moins 30 % en moles de motifs Q (SiO₄⁴⁻), et pour lesquelles p+z a la signification de 0.

8. Procédé pour la production de mortier de jointoiement selon les revendications 1 à 4, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant comme particules P du groupe B2) des résines de silicone de formule générale [R⁴_{(p+z)}SiO_{(4-p-z)/2}] qui sont constituées seulement de motifs M (R₃SiO-) et de motifs Q (SiO₄⁴⁻) , et pour lesquelles p+z a la signification de 0 et 3.

9. Procédé pour la production de mortier de jointoiement selon les revendications 1 à 4, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, en utilisant comme particules P du groupe B2) des résines de silicone de formule générale [R⁴_{(p+z)}SiO_{(4-p-z)/2}] qui sont constituées d'une association quelconque de motifs M (R₃SiO-), de motifs D (-OSiR₂O-), de motifs T (RSiO₃³⁻) et de motifs Q (SiO₄⁴⁻) , étant entendu que des motifs T et/ou des motifs Q sont toujours contenus et leur proportion par rapport aux motifs qui constituent la résine de silicone vaut au total au moins 20 % en moles et lorsque seulement l'un de ces motifs est respectivement présent, sa proportion est dans chaque cas d'au moins 20 % en moles.

10. Procédé pour la production de mortier de jointoiement selon les revendications 1 à 9, **caractérisé en ce qu'**on utilise des copolymérisats de monomères à insaturation éthylénique et de nanoparticules à fonctionnalisation éthylénique sous forme de leurs dispersions aqueuses de polymère ou de poudres de polymère redispersables dans l'eau, le diamètre moyen de la particule P valant de 1 à 100 nm, la taille de particule étant déterminée par microscopie électronique à transmission des dispersions obtenues ou des films pouvant être obtenus à partir des dispersions.

11. Mortier de jointoiement, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, pouvant être obtenus par polymérisation amorcée par voie radicalaire en milieu aqueux, et éventuellement séchage subséquent de la dispersion de polymère ainsi obtenue, de
A) un ou plusieurs monomères choisis dans le groupe comprenant des esters vinyliques, des esters d'acide (méth)acrylique, des composés vinylaromatiques, des oléfines, des 1,3-diènes, des éthers vinyliques et des halogénures de vinyle et éventuellement d'autres monomères copolymérisables avec ceux-ci, en présence de
B) au moins une particule P ayant un diamètre moyen de 1 à 1 000 nm, la taille de particule étant déterminée par microscopie électronique à transmission des dispersions obtenues ou des films pouvant être obtenus à partir des dispersions, qui est fonctionnalisée avec des groupes à insaturation éthylénique, aptes à la polymérisation radicalaire,
B1) en utilisant en tant que particule (s) P une ou plusieurs particules choisies dans le groupe des oxydes métalliques et des oxydes de métalloïdes et/ou
B2) en utilisant en tant que particules P des résines de silicone qui sont constituées de motifs répétitifs de formule générale [R⁴_{(p+z)}SiO_{(4-p-z)/2}] (II) , R⁴ étant le même ou différent et représentant un atome d'hydrogène, des radicaux hydroxy ainsi qu'alkyle, cycloalkyle, aryle, alcoxy ou aryloxy ayant chacun jusqu'à 18 atomes de carbone, qui peuvent éventuellement être substitués, pour au moins 20 % en moles de la résine de silicone respective p + z valant 0, 1 ou 3, et B1) et B2) étant fonctionnalisées chacune avec un ou plusieurs α-organosilanes de formule générale (R¹O)₃₋ₙ(R²)ₙSi-(CR³₂)-X (I), R¹ représentant un atome d'hydrogène, un radical alkyle ayant de 1 à 6 atomes de carbone ou un radical aryle, R² et R³ représentant chacun, indépendamment l'un de l'autre, un atome d'hydrogène, un radical alkyle ayant de 1 à 12 atomes de carbone ou un radical aryle, n pouvant avoir les valeurs 0, 1 ou 2, et X étant un radical comportant de 2 à 20 atomes d'hydrocarbure avec un groupe à insaturation éthylénique,
et **en ce qu'**il contient du sable de composition et à finesse de grain les plus diverses, et éventuellement d'autres liants et adjuvants.

12. Mortier de jointoiement selon la revendication 11, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, dans la dispersion de polymère ou dans la poudre de polymère étant encore contenus jusqu'à 30 % en poids, par rapport au poids total des composants A) et B), d'au moins un silane de formule générale (R⁵)₄₋ₘ-Si-(OR⁶)ₘ (III), m étant un nombre ayant une valeur de 1, 2, 3 ou 4, R⁵ étant un radical organofonctionnel, choisi dans le groupe constitué par un radical alcoxy, un radical aryloxy, un radical monoester d'acide phosphonique, un radical diester d'acide phosphonique, un radical d'acide phosphonique, un radical méthacryloyloxy, un radical acryloyloxy, un radical vinyle, un radical mercapto, un radical isocyanato, le radical isocyanato pouvant éventuellement être bloqué vis-à-vis de réactions pour la protection contre des réactions chimiques, un radical hydroxy, un radical hydroxyalkyle, un radical vinyle, un radical époxy, un radical glycidyloxy, un radical morpholino, un radical pipérazino, un radical amino primaire, secondaire ou tertiaire comportant un ou plusieurs atomes d'azote, les atomes d'azote pouvant être substitués par hydrogène ou par des radicaux hydrocarbonés monovalents aromatiques, aliphatiques ou cycloaliphatiques, un radical carboxy, un radical anhydride d'acide carboxylique, un radical aldéhyde, un radical uréthane, un radical urée, le radical R⁵ pouvant être lié directement à l'atome de silicium ou pouvant être séparé de celui-ci par une chaîne carbonée de 1 à 6 atomes de carbone et R⁶ représentant un radical hydrocarboné monovalent aliphatique linéaire ou ramifié ou cycloaliphatique ou un radical hydrocarboné aromatique monovalent ou un radical -C(=O)-R⁷, R⁷ représentant un radical hydrocarboné monovalent aliphatique linéaire ou ramifié ou un radical hydrocarboné cycloaliphatique ou un radical hydrocarboné aromatique monovalent.

13. Mortier de jointoiement selon la revendication 11 ou 12, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, comme comonomères A) étant utilisés un ou plusieurs monomères choisis dans le groupe constitué par l'acétate de vinyle, des esters vinyliques d'acides monocarboxyliques α-ramifiés ayant de 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène, le 1,3-butadiène.

14. Mortier de jointoiement selon les revendications 11 à 13, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, l'α-organosilane de formule (R¹O)₃₋ₙ(R²)ₙSi-(CR³₂)-X (I) contenant en tant que radicaux R¹ et R² des groupes alkyle non substitués ayant de 1 à 6 atomes de carbone et en tant que radical R³ un atome d'hydrogène, et en tant que radical X des radicaux en C₂-C₁₀ mono-insaturés.

15. Mortier de jointoiement selon les revendications 11 à 14, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, comme particules P du groupe B1) étant utilisés des oxydes de silicium et des oxydes des métaux aluminium, titane, zirconium, tantale, tungstène, hafnium, zinc et étain.

16. Mortier de jointoiement selon les revendications 11 à 15, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, comme oxydes de silicium étant utilisés de l'acide silicique colloïdal, de l'acide silicique pyrogéné, de l'acide silicique précipité, des sols de silice.

17. Mortier de jointoiement selon les revendications 11 à 14, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, en tant que particules P du groupe B2) étant utilisées des résines de silicone de formule générale [R⁴_{(p+z)}SiO_{(4-p-z)/2}] qui sont constituées à raison d'au moins 30 % en moles de motifs Q (SiO₄⁴⁻), et pour lesquelles p+z a la signification de 0.

18. Mortier de jointoiement selon les revendications 11 à 14, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, comme particules P du groupe B2) étant utilisées des résines de silicone de formule générale [R⁴_{(p+z)}SiO_{(4-p-z)/2}] qui sont constituées seulement de motifs M (R₃SiO-) et de motifs Q (SiO₄⁴⁻), et pour lesquelles p+z a la signification de 0 et 3.

19. Mortier de jointoiement selon les revendications 11 à 14, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, comme particules P du groupe B2) étant utilisées des résines de silicone de formule générale [R⁴_{(p+z)}SiO_{(4-p-z)/2}] qui sont constituées d'une association quelconque de motifs M (R₃SiO-), de motifs D (-OSiR₂O-) , de motifs T (RSiO₃³⁻) et de motifs Q (SiO₄⁴⁻) , étant entendu que des motifs T et/ou des motifs Q sont toujours contenus et leur proportion par rapport aux motifs qui constituent la résine de silicone vaut au total au moins 20 % en moles et lorsque seulement l'un de ces motifs est respectivement présent, sa proportion est dans chaque cas d'au moins 20 % en moles.

20. Mortier de jointoiement selon les revendications 11 à 19, **caractérisé en ce que** sont contenus des copolymérisats de monomères à insaturation éthylénique et de nanoparticules à fonctionnalisation éthylénique sous forme de leurs dispersions aqueuses de polymère ou de poudres de polymère redispersables dans l'eau, le diamètre moyen de la particule P valant de 1 à 100 nm, la taille de particule étant déterminée par microscopie électronique à transmission des dispersions obtenues ou des films pouvant être obtenus à partir des dispersions.
